# EUROPEAN PATENT APPLICATION

(11) **EP 4 123 805 A1**
(43) Date of publication of application: **25.01.2023**
(21) Application number: 21187509.1
(22) Date of filing: 23.07.2021
(51) Int. Cl.: H01M 50/204, H01M 50/24

(54) **BATTERY HOLDER AND MANUFACTURING PROCESS OF SAID BATTERY HOLDER**

(71) Applicant: Constellium UK Limited, Burnham, SL1 8DF (GB); Constellium Singen GmbH, 78224 Singen (DE)
(72) Inventor: BEN TAHAR, Mehdi, 38000 GRENOBLE (FR); PATRINOS, Panagiotis, LONDRES, W53HR (GB); O'CARROLL, Dara, BURNHAM, SL1 8DF (GB); MATIC, Ognjen, BURNHAM, SL1 8Df (GB); HAMMOND, William, BURNHAM, SL1 8DF (GB); BESLIN, Emmanuel, 38090 VAULX MILIEU (FR); JARRETT, Martin, LITTLE BOURTON, OX17 1RB (GB)
(74) Representative: Constellium - Propriété Industrielle

(57) **Abstract**

The invention concerns a battery holder (1) for an electric or hybrid motorized transport vehicle, the battery holder (1) comprising a frame (3) comprising at least one frame part (9) being configured to absorb all or part of shocks by an external element (7) likely to be applied to the battery holder (1).

The frame part (9) comprising at least one internal profile (10) and at least one external profile (30), said at least one internal profile (10) being positioned between said at least one external profile (30) and the floor (5).

The at least one internal profile (10) is formed from a first material having a first yield strength value, and the at least one external profile (30) is formed from a second material distinct from the first material and having a second yield strength value.

The invention also concerns a manufacturing process of a battery holder (1).

## Description

### TECHNICAL FIELD OF THE INVENTION

This invention relates to the field of electric or hybrid motorized transport vehicle, and more particularly to a battery holder intended to receive all or part of a battery to be supported by the battery holder.

### BACKGROUND

The state of the art described below presents applications in the field of electric or hybrid vehicles, but it could also relate to other fields or applications requiring the use of a battery holder.

It is known from the state of the art to use a battery enclosure presenting a structural frame designed to protect the battery modules from damages in the event of side impact, or shock from environmental ingresses. Said battery enclosure generally comprises the following elements:
- A circumferential structural frame usually fastened into the vehicle body structure using a bolting system.
- A floor closing the bottom of the frame and configured to receive all or part of the battery modules
- A lid made of plastic, steel or aluminum and placed on top of the above structure to seal completely the battery enclosure.

A major role of said enclosure is to protect the battery modules from impacts. In particular, side impacts generate the most stringent requirement, leading manufacturers to configure and design very complex and heavy multi-cavity structural frame to absorb the side crush kinetic energy generated during side vehicle collision against an external element. An appropriate configuration of energy absorbing elements will take into account both the geometry of these elements and their ability to absorb impact energy. In addition to the complex and heavy multi-cavity structural design, the metal cost related to the high weight per meter and very complex shapes becomes a major cost contributor.

Besides, it has been established that increasing the material strength enables a higher energy absorption per unit weight for a comparable ductility and therefore provides a weight saving and an associated metal cost saving opportunity. However, the high strength alloys tend to be less ductile, more quench sensitive and less extrudable in complex shapes.

Therefore, it leads to a major technical/cost barrier against introduction of such high strength alloys as a direct solution for weight saving. Indeed, using such materials may:
- limit the possible shapes;
- require large tolerances;
- involve low extrusion productivity, and therefore
- increase the costs.

### SUMMARY OF THE INVENTION

The present invention aims at solving the aforementioned problems, especially by reducing the shape complexity and offers the following advantages:
- protecting the battery modules from impacts and shocks;
- reducing the weight of the battery enclosure;
- allowing a good fit with the vehicle body structure;
- permit to machine the mounting points at the component level rather than at the assembly level;
- reducing the manufacturing cost.

To this end, the invention concerns a battery holder for a transport vehicle. The battery holder comprises a frame and a floor delimiting between them a housing intended to receive all or part of a battery, said frame comprising at least one frame part extending over all or part of a circumference of the frame, said at least one frame part being configured to absorb all or part of shocks by an external element likely to be applied to the battery holder, said frame part comprising at least one internal profile and at least one external profile, said at least one internal profile being integral with said at least one external profile and positioned between said at least one external profile and the floor, wherein said at least one internal profile is a profile formed from a first material having a first yield strength value, said first yield strength value being chosen so as to limit or prevent deformation of the at least one internal profile , and wherein said at least one external profile is formed from a second material distinct from the first material and having a second yield strength value, the at least one external profile being configured to deform prior to the internal profile, so as to absorb all or part of the energy coming from said shocks likely to be applied to the battery holder by said external element.

By "profile" is meant a product of uniform cross-section along its whole length. Depending on the form of the cross-section, said profile may be called solid profile or hollow profile.

According to one embodiment, the battery holder comprises one or more of the following features, taken alone or in combination.

According to one embodiment, the at least one external profile is an extruded profile.

According to one embodiment, the at least one internal profile is an extruded profile.

According to one embodiment, the at least one external profile and/or the at least external profile is made from a roll formed sheet.

According to one embodiment, the first yield strength value is rior than the second yield strength value.

The arrangements described above make it possible to provide a battery holder showing improved shock resistance capacity. Combining the geometry and the yield strength value for each profile make it possible to provide a battery holder configured to have different deformation behaviour for the first material and the second material, and thus for the internal or external profile, to guarantee the integrity of the battery holder frame in the event of an impact. The integrity of the battery holder frame depends on the way to absorb and to transfer the energy produced by the impact by each frame. When an external shock occurs and is applied to the battery holder externally to the frame, the external profile provides energy absorption consisting in absorbing the majority of the energy generated by the impact, while the internal profile provides a high mechanical strength to limit or prevent deforming of the frame towards the housing beyond a certain distance. Moreover, and advantageously, the presence of an external profile having a second ductility superior than that of the internal profile allows the external profile to deform during an impact and to absorb by this way, a greater quantity of energy. A common way to measure the deformation behaviour also called ductility is described in the standard VDA 238-100 "Plate bending test for metallic materials".

According to one embodiment, the first material and the second material have different deformation behaviour measured according to VDA238-100.

VDA238-100 corresponds to test instructions used to perform plate bending test and to determine the bending angle with the objective to get information about the deformation behaviour and the sensitivity of metallic material to failure during forming processes with dominant bending components or at crash load. A bending angle value is a known value to determine the ductility of a metallic material.

Advantageously, a yield strength value of the internal profile greater than that of the external profile makes it possible to guarantee the integrity of the battery holder frame in the event of an impact, even if the external profile deforms for the purpose of absorption of energy. Moreover, having a yield strength value of the internal profile greater than that of the external profile allows the external profile to deform with a lower load level than the internal profile.

Advantageously it will allow the external profile to deform during an impact and to absorb by this way, a greater quantity of energy. In summary, when an external shock occurs, and is applied to the battery holder externally to the frame, the external profile provides energy absorption consisting in absorbing the majority of the energy generated by the impact, while the internal profile provides a high mechanical strength to limit or prevent deforming of the frame towards the housing beyond a certain distance.

Advantageously, the arrangements described above make it possible to provide a battery holder having a reduced weight combined with sufficient mechanical properties to prevent an intrusion into the housing during an external shock.

According to one embodiment, the battery holder comprises fixing elements ensuring fixing of the internal profile to the floor and/or fixing elements ensuring fixing of the external profile to the floor.

According to one embodiment, the first yield strength value of the first material constituting the at least one internal profile is greater than or equal to 280 MPa, and in particular greater than or equal to 320 MPa and more particularly greater or equal to 340 MPa.

According to one embodiment, the second yield strength value of the second material constituting the at least one external profile is greater than or equal to 200 MPa, and in particular greater or equal to 240 MPa, and more particularly greater than or equal to 280 MPa.

According to one embodiment, the ratio of the first yield strength value of the first material constituting the at least one internal profile and the second yield strength value of the second material constituting the at least one external profile is between 1.0 and 1.7, and more particularly between 1.1 and 1.4.

According to one embodiment, the second yield strength value of the second material constituting the at least one external profile is equal to 280 MPa, and the first yield strength value of the first material constituting the at least an internal profile is equal to 340 MPa.

Synergistically, the use of a second material with a higher yield strength value also makes it possible to reduce the mass of the profile compared to a situation where the profile would be mono-block and mono-material.

According to one embodiment, the first bending angle, measured in the transverse direction according to VDA 238-100, of the first material constituting the at least one internal profile, is greater than or equal to 30°, and in particular greater than or equal to 35°, more particularly greater or equal to 40°, even more particularly greater or equal to 45° and even most particularly greater than or equal to 50°.

According to one embodiment, the second bending angle value, measured in the transverse direction according to VDA 238-100, of the second material constituting the at least one external profile, is greater than or equal to 50°, in particular greater than or equal to 55°, more particularly greater than or equal to 60°, even more particularly greater or equal to 65° and even most particularly greater than or equal to 70°.

According to one embodiment, the at least one internal profile and the at least one external profile comprise extruded aluminum profiles.

According to one embodiment, the at least one internal profile and the at least one external profile are integral with each other along a longitudinal direction, along which said internal and external profiles extend.

According to one embodiment, at least one of said internal and external profiles has a cross section, viewed perpendicular to the longitudinal direction, which is constant along the longitudinal direction.

According to one embodiment, said cross section may be a solid or hollow section.

According to one embodiment, said cross section is a hollow cross section including at least one cavity.

According to one embodiment, at least one of said internal and external profile defines at least one longitudinal cavity extending along all or part of said corresponding profile, according to the longitudinal direction.

According to one embodiment, said at least one longitudinal cavity has a cross section, seen perpendicular to the longitudinal direction, having a generally rectangular, or triangular, or circular, or trapezoidal, or square, or equivalent shape.

According to one embodiment, at least one of said internal and external profile comprises at least two longitudinal cavities, and in particular three longitudinal cavities.

According to one embodiment, the at least one internal profile comprises at least one longitudinal cavity, and wherein the external profile comprises at least one longitudinal cavity, the at least one longitudinal cavity of the internal profile having a cross section that is strictly different from a cross section of the at least one longitudinal cavity of the external profile.

According to one embodiment, one of the profiles, for example the internal profile, comprises three longitudinal cavities having triangular and trapezoidal cutting sections, and the other of the profiles, for example the external profile, comprises two longitudinal cavities having square shaped cross sections.

According to one embodiment, the at least one internal profile is fixed to the at least one external profile by fixing means.

According to one embodiment, the fixing means can comprise screws, or a bolt-nut system.

Advantageously, the fixing means can ensure the presence of a dimensional tolerance allowing the dimensions of the frame to be adjusted once it is formed. Thus, it is possible to assemble different frame parts to form the frame, and to adjust the dimensions of the frame when the battery holder receives the battery on the floor.

According to one embodiment, the fixing means comprise welding of the at least one internal profile with the at least one external profile.

According to one embodiment the fixing means comprise adhesive bonding of the at least one internal profile with the at least one external profile.

According to one embodiment, the circumference of the frame has a closed shape encircling the floor, said frame circumference further comprises a plurality of frame edges meeting two by two at their ends, at least one of said frame edges among the plurality of frame edges being constituted by said frame part.

According to one embodiment, the frame may have a general shape of a quadrilateral, and may include four frame edges defining the sides of said quadrilateral. For example, said four frame edges can define front, rear, and sides of a vehicle.

Advantageously, the material constituting the internal profile or the external profile can be chosen as a function of the position of the frame part comprising said internal and external profiles.

Furthermore, the geometry of the longitudinal cavities of the internal profile or of the external profile can be chosen depending on the position of the frame part comprising said internal and external profiles.

According to one embodiment, the frame comprises a plurality of frame parts.

According to one embodiment, the plurality of frame edges comprises at least two longitudinal edges shifted from each other in a lateral direction of the frame counted perpendicular to the direction of travel of the transport vehicle, said at least two longitudinal edges being formed at least in part by a frame part of said plurality of frame parts.

According to one embodiment, the plurality of frame edges comprises at least two side edges shifted from each other in a longitudinal direction of the frame counted in the direction of travel of the transport vehicle, said at least two side edges being formed at least in part by a frame part of said plurality of frame parts.

The object of the invention may also be achieved by implementing an electric or hybrid motorized transport vehicle, comprising at least one battery holder of the type of one of those described above.

According to one embodiment where the transport vehicle comprises an underbody, at least one external profile of the frame part of the battery holder is a separate piece from the component part of the underbody.

Finally, the object of the invention may also be achieved by implementing a manufacturing process of a battery holder for a transport vehicle comprising the following steps:
- a step of forming at least one internal profile in which a first material having a first yield strength value is formed so as to form said at least one internal profile;
- a step of provision of at least one external profile formed in a second material distinct from the first material and having a second yield strength value;
- a step of manufacturing of a frame part by securing said at least one internal profile with said at least one external profile, said frame part defining at least part of a periphery of a frame, said frame being configured to absorb all or part of shocks by an external element likely to be applied to the battery holder.

According to an embodiment, the manufacturing process comprises one or more of the following features, taken alone or in combination.

According to one embodiment, the step of providing at least one external profile comprises the fact that the second material is extruded so as to form said at least one external profile.

According to one embodiment, the step of forming at least one internal profile comprises the fact that the first material is extruded so as to form said at least one internal profile.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings, in which the same reference refer to similar elements or to elements having similar functions, and in which:
[Fig. 1] represents a perspective view of one embodiment of the invention.
[Fig. 2] represents a cross-section view of one embodiment of the invention.
[Fig. 3] represents a perspective view the embodiment of figure 1 before an impact with an external element.
[Fig. 4] represents a perspective view the embodiment of figure 1 during an impact with an external element.

### DETAILED DESCRIPTION OF THE INVENTION ACCORDING TO AN EMBODIMENT

In the figures and in the remainder of the description, the same references represent identical or similar elements. In addition, the various elements are not represented to scale so as to favor the clarity of the figures. Furthermore, the different embodiments and variants are not mutually exclusive and can be combined with one another.

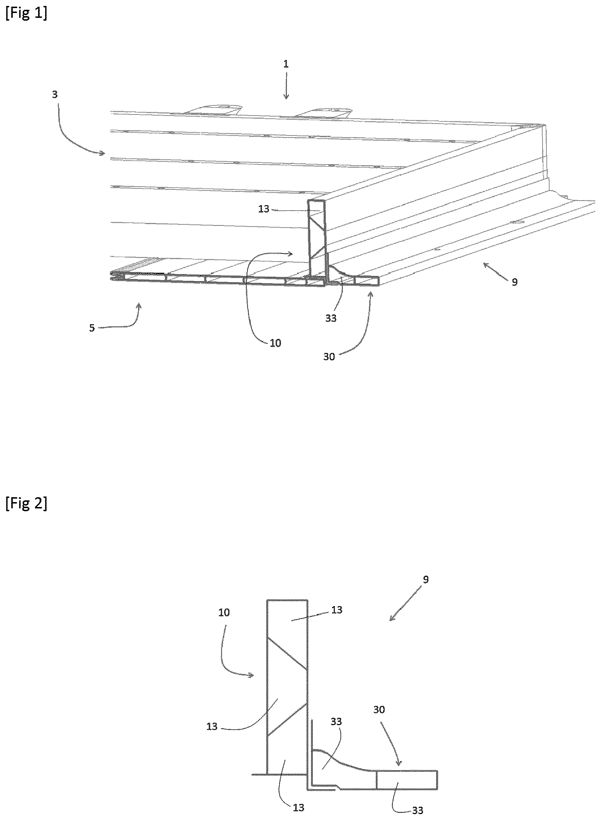

As illustrated on figures 1 to 4, the invention concerns a battery holder 1 for a transport vehicle. More particularly, the invention refers to battery holders intended for electric or hybrid motorized transport vehicle.

The battery holder 1 comprises a frame 3 and a floor 5 delimiting between them a housing intended to receive all or part of a battery. Generally, the circumference of the frame 3 has a closed shape encircling the floor 5, and the frame 3 circumference further comprises a plurality of frame edges meeting two by two at their ends. According to one embodiment, the frame 3 may have a general shape of a quadrilateral, and may include four frame edges defining the sides of said quadrilateral. For example, said four frame edges can define front, rear, and sides of a vehicle. The frame 3 comprises at least one frame part 9 extending over all or part of a circumference of the frame 3 and is configured to absorb all or part of shocks by an external element 7 likely to be applied to the battery holder 1. As illustrated in the figures, the frame 3 may comprise a plurality of frame parts 9, and at least one of the frame edges among the plurality of frame edges may be constituted by one or more frame parts 9 of the plurality of frame parts 9. According to one embodiment, the plurality of frame edges comprises at least two longitudinal edges shifted from each other in a lateral direction of the frame 3 counted perpendicular to the direction of travel of the transport vehicle, said at least two longitudinal edges being formed at least in part by a frame part 9 of said plurality of frame parts 9. Furthermore, the plurality of frame edges may comprise at least two side edges shifted from each other in a longitudinal direction of the frame 3 counted in the direction of travel of the transport vehicle, said at least two side edges being formed at least in part by a frame part 9 of said plurality of frame parts 9.

As depicted is the figures and more particularly on the cross section of figure 2, each frame part 9 comprises at least one internal profile 10 and at least one external profile 30. Said at least one internal profile 10 is integral with said at least one external profile 30 and positioned between said at least one external profile 30 and the floor 5. Generally, the at least one internal profile 10 and the at least one external profile 30 are integral with each other along a longitudinal direction, along which said internal and external profiles 10, 30 extend. In a configuration where the vehicle intended to receive the battery holder 1 comprises an underbody, it is possible that the at least one external profile 30 is a separate piece from the component part of the underbody. In the following description, the term "profile" is used to describe a product of uniform cross-section. Usually, said profile is supplied in straight lengths. Depending on the form of the cross-section, said profile may be called solid profile or hollow profile.

According to one embodiment, the battery holder 1 comprises fixing elements ensuring fixing of the internal profile 10 to the floor 5 and/or fixing elements ensuring fixing of the external profile 30 to the floor 5. Moreover, the at least one internal profile 10 may be fixed to the at least one external profile 30 by fixing means. For example, the fixing means can comprise screws, or a bolt-nut system. Alternatively, the fixing means may comprise welding of the at least one internal profile 10 with the at least one external profile 30. Alternatively, the fixing means may comprise adhesive bonding of the at least one internal profile 10 with the at least one external profile 30. Advantageously, the fixing means can ensure the presence of a dimensional tolerance allowing the dimensions of the frame to be adjusted once it is formed. Thus, it is possible to assemble different frame parts 9 to form the frame 3, and to adjust the dimensions of the frame 3 when the battery holder 1 receives the battery on the floor 5.

Advantageously, the at least one internal profile 10 and/or the at least one external profile 30 are extruded profiles. More particularly, the at least one internal profile 10 and the at least one external profile 30 may comprise extruded aluminum profiles. At least one of said internal and external profiles 10, 30 may present a cross section, viewed perpendicular to the longitudinal direction, which is constant along the longitudinal direction. For example, said cross section may be a solid or hollow section.

In the embodiment illustrated by the figure, said cross section is a hollow cross section including at least one cavity. Generally, at least one of the internal and external profile 10, 30 defines at least one longitudinal cavity 13, 33, more particularly at least two longitudinal cavities 13, 33, and even more particularly three longitudinal cavities 13, 33 extending along all or part of said corresponding profile, according to the longitudinal direction.

Each longitudinal cavity 13, 33 may have a cross section, seen perpendicular to the longitudinal direction, having a generally rectangular, or triangular, or circular, or trapezoidal, or square, or equivalent shape. When the at least one internal profile 10 comprises at least one longitudinal cavity 13, and when the external profile 30 comprises at least one longitudinal cavity 33, it is possible that the at least one longitudinal cavity 13 of the internal profile 10 has a cross section that is strictly different from a cross section of the at least one longitudinal cavity 33 of the external profile 30. As illustrated in figure 2; the internal profile 10, comprises three longitudinal cavities 13 having triangular and trapezoidal cutting sections, and the external profile 30, comprises two longitudinal cavities 33 having quadrilateral shaped cross sections. Furthermore, the geometry of the longitudinal cavities 13, 33 of the internal profile 10 or of the external profile 30 can be chosen depending on the position of the frame part 9 comprising said internal and external profiles 10, 30.

The at least one internal profile 10 is a profile formed from a first material having a first yield strength value, said first yield strength value being chosen so as to limit or prevent deformation of the at least one internal profile 10. For example, the first yield strength value of the first material constituting the at least one internal profile 10 is greater than or equal to 280 MPa, and in particular greater than or equal to 320 MPa and more particularly greater or equal to 340 MPa.

The at least one external profile 30 is formed from a second material distinct from the first material and having a second yield strength value, the at least one external profile 30 being configured to deform prior to the internal profile 10, so as to absorb all or part of the energy coming from said shocks likely to be applied to the battery holder 1 by the external element 7. For example, the second yield strength value of the second material constituting the at least one external profile 30 is greater than or equal to 200 MPa, and more particularly greater or equal to 240 MPa, and in particular greater than or equal to 280 MPa.

Advantageously, the first yield strength value is strictly superior than the second yield strength value. For example, the ratio of the first yield strength value of the first material constituting the at least one internal profile 10 and the second yield strength value of the second material constituting the at least one external profile 30 is between 1.0 and 1.7, and more particularly between 1.1 and 1.4. The second yield strength value of the second material constituting the at least one external profile 30 may for example be equal to 280 MPa, and the first yield strength value of the first material constituting the at least an internal profile 10 may be equal to 340 MPa. Generally, the material constituting the internal profile 10 or the external profile 30 can be chosen as a function of the position of the frame part 9 comprising said internal and external profiles 10, 30.

The at least one internal profile 10 and the at least one external profile 30 have different deformation behaviour. For example, the first bending angle, measured in the transverse direction according to VDA 238-100 of first material constituting the at least one internal profile 10, is greater than or equal to 30°, and in particular greater than or equal to 35°, more particularly greater or equal to 40°, even more particularly greater or equal to 45° and even most greater than or equal to 50°, and the second bending angle value, measured in the transverse direction according to VDA 238-100, of the second material constituting the at least one external profile 30, is greater than or equal to 50°, in particular greater than or equal to 55°, more particularly greater than or equal to 60°, even more particularly greater or equal to 65° and even most greater than or equal to 70°.

Advantageously, the external profile 30 has a second ductility superior than that of the internal profile 10.

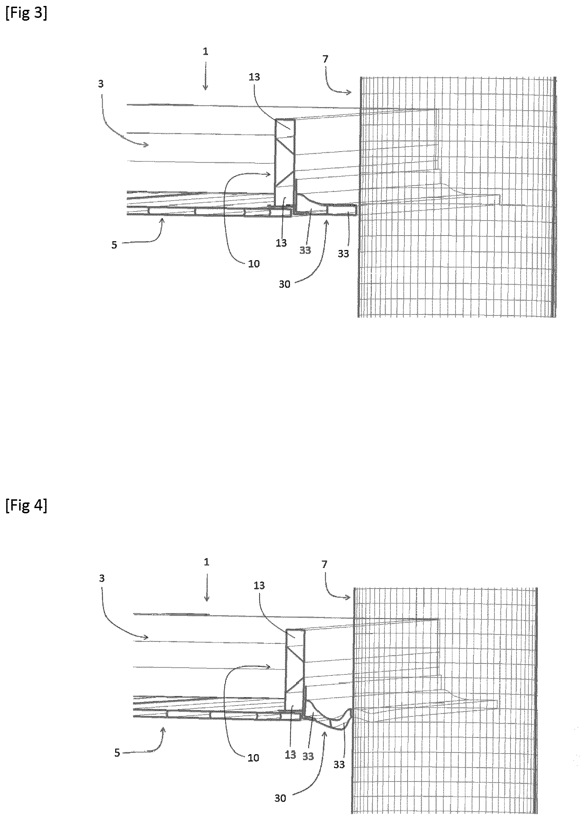

The arrangements described above make it possible to provide a battery holder 1 showing improved shock resistance capacity. The yield strength value of the internal profile 10 greater than that of the external profile 30 makes it possible to guarantee the integrity of the battery holder 1 frame 3 in the event of an impact, even if the external profile 30 deforms for the purpose of absorption of energy. Moreover, have a yield strength value of the internal profile 10 greater than that of the external profile 30 is that the external profile 30 will deform with a lower load level than the internal profile 10. In summary, and as illustrated in figure 3 and 4, when an external shock occurs and is applied to the battery holder 1 externally to the frame 3, the external profile 30 provides energy absorption consisting in absorbing the majority of the energy generated by the impact, while the internal profile 10 provides a high mechanical strength to limit or prevent deforming of the frame 3 towards the housing beyond a certain distance.

Thus, the arrangements described above make it possible to provide a battery holder 1 having a reduced weight combined with sufficient mechanical properties to prevent an intrusion into the housing during an external shock. Synergistically, the use of a second material with a higher yield strength value also makes it possible to reduce the mass of the profile compared to a situation where the profile would be mono-block and mono-material.

The invention also concerns, a manufacturing process of a battery holder 1 for a transport vehicle comprising the following steps:
- a step of forming at least one internal profile 10 in which a first material having a first yield strength value is formed so as to form said at least one internal profile 10. For example, this step of forming at least one internal profile 10 may comprise the fact that the first material is extruded so as to form said at least one internal profile 10.
- a step of provision of at least one external profile 30 formed in a second material distinct from the first material and having a second yield strength value. For example, the step of providing at least one external profile 30 comprises the fact that the second material is extruded so as to form said at least one external profile 30
- a step of manufacturing of a frame part 9 by securing said at least one internal profile 10 with said at least one external profile 30, said frame part 9 defining at least part of a periphery of a frame 3, said frame 3 being configured to absorb all or part of shocks by an external element 7 likely to be applied to the battery holder 1.

## Claims

1. Battery holder (1) for a transport vehicle, the battery holder (1) comprising a frame (3) and a floor (5) delimiting between them a housing intended to receive all or part of a battery, said frame (3) comprising at least one frame part (9) extending over all or part of a circumference of the frame (3), said at least one frame part (9) being configured to absorb all or part of shocks by an external element (7) likely to be applied to the battery holder (1), said frame part (9) comprising at least one internal profile (10) and at least one external profile (30), said at least one internal profile (10) being integral with said at least one external profile (30) and positioned between said at least one external profile (30) and the floor (5),
wherein said at least one internal profile (10) is a profile formed from a first material having a first yield strength value, said first yield strength value being chosen so as to limit or prevent deformation of the at least one internal profile (10)
wherein said at least one external profile (30) is formed from a second material distinct from the first material and having a second yield strength value, the at least one external profile (30) being configured to deform prior to the internal profile (10), so as to absorb all or part of the energy coming from said shocks likely to be applied to the battery holder (1) by said external element (7).

2. Battery holder (1) according to claim 1, wherein the at least one external profile (30) is an extruded profile.

3. Battery holder (1) according to claim 1 or 2, wherein the at least one internal profile (10) is an extruded profile.

4. Battery holder (1) according to any one of claims 1 to 3 **characterized in that** the first yield strength value is strictly superior than the second yield strength value.

5. Battery holder (1) according to any one of claims 1 to 4, wherein the first yield strength value of the first material constituting the at least one internal profile (10) is greater than or equal to 280 MPa, and in particular greater than or equal to 320 MPa and more particularly greater or equal to 340 MPa

6. Battery holder (1) according to any one of claims 1 to 5, wherein the second yield strength value of the second material constituting the at least one external profile (30) is greater than or equal to 200 MPa, and more particularly greater or equal to 240 MPa, and in particular greater than or equal to 280 MPa.

7. Battery holder (1) according to any one of claims 1 to 6, wherein the at least one internal profile (10) and the at least one external profile (30) comprise extruded aluminum profiles.

8. Battery holder (1) according to any one of claims 1 to 7, wherein the at least one internal profile (10) and the at least one external profile (30) are integral with each other along a longitudinal direction, along which said internal and external profiles (10, 30) extend.

9. Battery holder (1) according to claim 8, wherein at least one of said internal and external profiles (10, 30) has a cross section, viewed perpendicular to the longitudinal direction, which is constant along the longitudinal direction.

10. Battery holder (1) according to any one of claims 8 or 9, wherein at least one of said internal and external profile (10, 30) defines at least one longitudinal cavity (13, 33) extending along all or part of said corresponding profile, according to the longitudinal direction.

11. Battery holder (1) according to claim 10, wherein at least one of said internal and external profile (10, 30) comprises at least two longitudinal cavities (13, 33), and in particular three longitudinal cavities (13, 33).

12. Battery holder (1) according to any one of claims 10 or 11, wherein the at least one internal profile (10) comprises at least one longitudinal cavity (13), and wherein the external profile (30) comprises at least one longitudinal cavity (33), the at least one longitudinal cavity (13) of the internal profile (10) having a cross section that is strictly different from a cross section of the at least one longitudinal cavity (33) of the external profile (30).

13. Battery holder (1) according to any one of claims 1 to 12, wherein the at least one internal profile (10) is fixed to the at least one external profile (30) by fixing means.

14. Battery holder (1) according to any one of claims 1 to 13, wherein the circumference of the frame (3) has a closed shape encircling the floor (5), said frame (3) circumference further comprises a plurality of frame edges meeting two by two at their ends, at least one of said frame edges among the plurality of frame edges being constituted by said frame part (9).

15. Battery holder (1) according to any one of claims 1 to 14, wherein the frame (3) comprises a plurality of frame parts (9).

16. Battery holder (1) according to claims 14 and 15, wherein the plurality of frame edges comprises at least two longitudinal edges shifted from each other in a lateral direction of the frame (3) counted perpendicular to the direction of travel of the transport vehicle, said at least two longitudinal edges being formed at least in part by a frame part (9) of said plurality of frame parts (9).

17. Battery holder (1) according to claims 14 and 15 or according to claim 16, wherein the plurality of frame edges comprises at least two side edges shifted from each other in a longitudinal direction of the frame counted in the direction of travel of the transport vehicle, said at least two side edges being formed at least in part by a frame part (9) of said plurality of frame parts (9).

18. Electric or hybrid motorized transport vehicle, comprising at least one battery holder (1) according to any one of claims 1 to 17.

19. A manufacturing process of a battery holder (1) for a transport vehicle comprising the following steps:
- a step of forming at least one internal profile (10) in which a first material having a first yield strength value is formed so as to form said at least one internal profile (10);
- a step of provision of at least one external profile (30) formed in a second material distinct from the first material and having a second yield strength value;
- a step of manufacturing of a frame part (9) by securing said at least one internal profile (10) with said at least one external profile (30), said frame part (9) defining at least part of a periphery of a frame (3), said frame (3) being configured to absorb all or part of shocks by an external element (7) likely to be applied to the battery holder (1).

20. Manufacturing process according to claim 19, in which the step of providing at least one external profile (30) comprises the fact that the second material is extruded so as to form said at least one external profile (30).

21. Manufacturing process according to claim 19 or 20, in which the step of forming the at least one internal profile (10) comprises the fact that the first material is extruded so as to form said at least one internal profile (10).
